(19) Europäisches Patentamt
European Patent Office
Office européen des brevets

(11) **EP 1 215 668 B1**

(12) **EUROPEAN PATENT SPECIFICATION**

(45) Date of publication and mention
of the grant of the patent:
**12.12.2007 Bulletin 2007/50**

(51) Int Cl.:
**G11B 7/135** *(2006.01)*    **G11B 7/125** *(2006.01)*

(21) Application number: **01307855.5**

(22) Date of filing: **14.09.2001**

(54) **Optical pickup capable of detecting and/or compensating for spherical aberration**

Optische Abtastvorrichtung fähig sphärische Aberration zu detektieren und/oder zu korrigieren

Dispositif de lecture optique capable de détecter et/ou de corriger l'aberration sphérique

(84) Designated Contracting States:
**DE FR GB NL**

(30) Priority: **08.12.2000 KR 2000074797**

(43) Date of publication of application:
**19.06.2002 Bulletin 2002/25**

(73) Proprietor: **SAMSUNG ELECTRONICS CO., LTD.
Suwon-City, Kyungki-do (KR)**

(72) Inventors:
  • **Kim, Tae-kyung
    Youngdeungpo-gu,
    Seoul (KR)**
  • **Ahn, Young-man
    Paldal-gu,
    Suwon-si,
    Gyeonggi-do (KR)**
  • **Suh, Hae-jung
    Gyeonggi-do (KR)**
  • **Chung, Chong-sam,
    718-1904 Salgugol Donga Apt.
    Suwon-si,
    Gyeonggi-do (KR)**

(74) Representative: **Robinson, Ian Michael et al
Appleyard Lees
15 Clare Road
Halifax HX1 2HY (GB)**

(56) References cited:
EP-A- 0 762 396        EP-A- 0 936 603
EP-A- 0 953 974

• **PATENT ABSTRACTS OF JAPAN vol. 2000, no.
09, 13 October 2000 (2000-10-13) & JP 2000
155979 A (MATSUSHITA ELECTRIC IND CO LTD),
6 June 2000 (2000-06-06)**

**Description**

The present invention relates to an optical pickup, and more particularly, to an optical pickup capable of detecting spherical aberration caused by thickness deviation of a recording medium, and/or capable of compensating for such spherical aberration.

In general, information recording/reproduction density increases as the size of a spot focused on a recording medium by an optical pickup apparatus becomes smaller. The shorter the wavelength ($\lambda$) of light used and the larger the numerical aperture (NA) of an objective lens, the smaller the size of light spot, which is expressed by equation (1):

$$size\ of\ light\ spot\ \alpha\ \lambda\ /\ NA \qquad\qquad ...(1)$$

To reduce the size of light spot focused on a recording medium for a higher recording density, there is a need to construct an optical pickup with a short wavelength light source, such as a blue semiconductor laser, and an objective lens having a larger NA. In this technical field, there is an interest in a format for increasing recording capacity up to 22.5 GB with a 0.85-NA objective lens and for reducing the thickness of a recording medium to 0.1 mm so as to prevent degradation of performance caused by tilting of the recording medium. Here, the thickness of recording medium means the distance from a light receiving surface of the recording medium to a first recording surface.

As shown in equation (2) below, spherical aberration $W_{40d}$ is proportional to the fourth power of the NA of the objective lens, and the deviation of the thickness of recording medium $\Delta d$. For this reason, if an objective lens with an NA of about 0.85 is adopted, the recording medium must have a uniform-thickness with a deviation less than $\pm 3$ $\mu$m. However, it is very difficult to manufacture the recording medium within the above thickness deviation range.

$$W_{40} = \frac{n^2 - 1}{8n^3}(NA)^4 \Delta d \qquad\qquad ...(2)$$

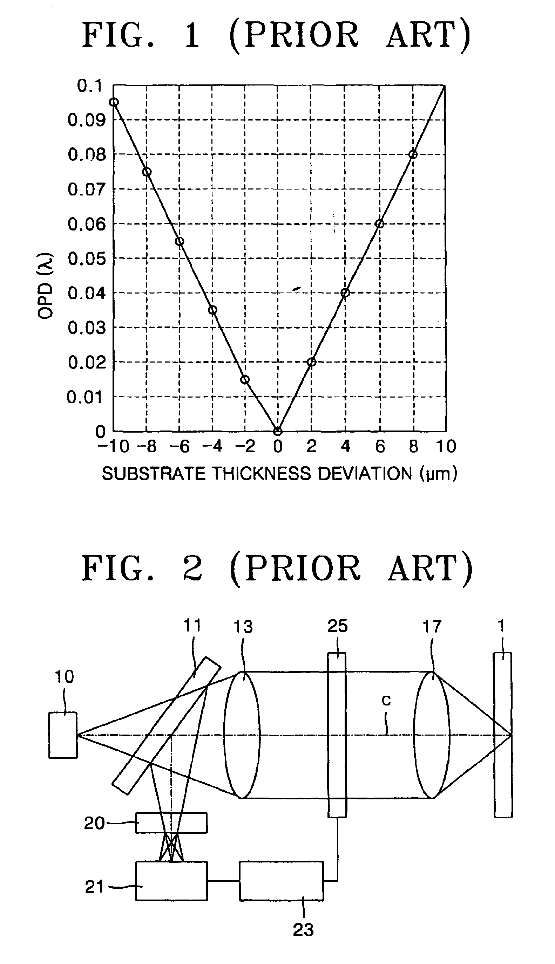

Figure 1 is a graph showing the relation between the thickness deviation of the recording medium and wavefront aberration (optical path difference (OPD)) caused by the thickness deviation when a 400-nm light source and an objective lens having an NA of 0.85 are used. As shown in Figure 1, the wavefront aberration increases in proportion to the thickness deviation. Thus, if the objective lens having a NA of 0.85 is adopted, there is a need to correct for spherical aberration caused by the thickness deviation of the recording medium.

Figure 2 shows a conventional optical pickup capable of detecting and correcting aberration, which is disclosed in Japanese Patent Publication No. hei 12-155979. Referring to Figure 2, the conventional optical pickup includes a light source 10, an objective lens 17 which focuses the light beam emitted from the light source 10 onto a recording medium 1, a half mirror 11 which alters the traveling path of a light beam passed through the objective lens 11 after having been reflected from the recording medium 1, a hologram 20 which divides and deflects an incident light beam from the half mirror 11 into a light beam passing through a particular region and a light beam passing through another region, a photodetector unit 21 including first through fourth photodetectors 21a, 21b, 21c, and 21d, which detects the deflected light passed through the particular region, a signal processing circuit 23 which detects aberration from the detection signals of the first through fourth photodetectors, and a wavefront changing device 25 which changes the shape of the wavefront of the light beam going toward the recording medium 1 from the light beam source 10 according to the signal from the signal processing circuit 23. In Figure 2, reference numeral 13 denotes a collimating lens which collimates the diverging light beam emitted from the light source 10.

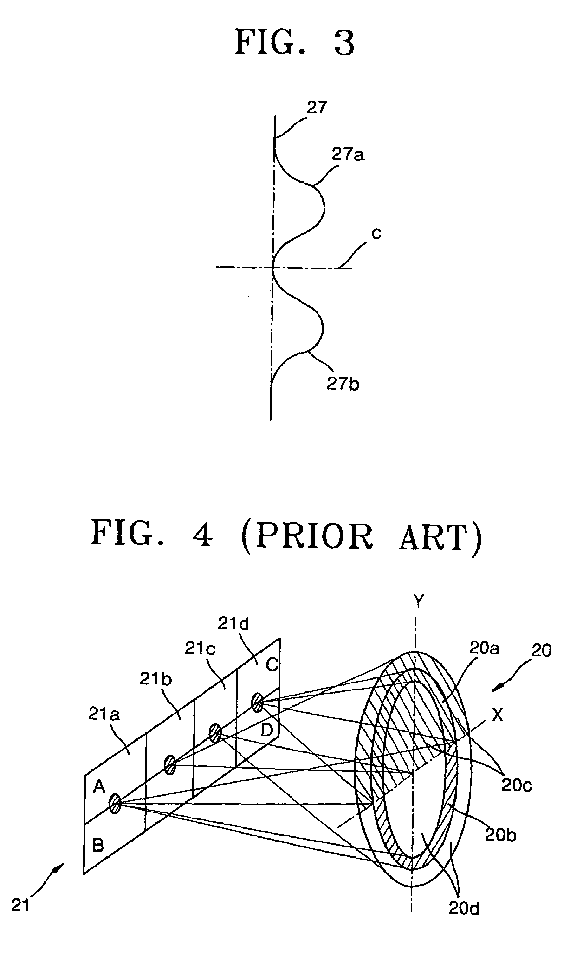

Figure 3 illustrates wavefront aberration resulting from spherical aberration. When spherical aberration occurs, retarded wavefronts 27a and 27b which are symmetrical around the optical axis $c$ are generated with respect to a reference wavefront 27 at the aperture center. When spherical aberration occurs, leading wavefronts which are symmetrically around the optical axis $c$ may be generated.

As shown in Figure 4, the hologram 20 includes first and second diffraction areas 20a and 20b which select, divide and diffract only the retarded wavefront portion such that divided portions are symmetrical with respect to the x-axis crossing the optical axis and go toward the first and fourth photodetectors 21a and 21d. The hologram 20 also includes a third diffraction area 20c which diffracts the light beam portion excluding the retarded wavefront portion above the x-axis such that the diffracted light beam portion goes toward the second photodetector 21b; and a transmission area 20d which transmits the light beam portion below the x-axis such that the transmitted light beam portion goes toward the third photodetector 21c. The first and second diffraction areas 20a and 20b have a semicircular shape.

Each of the first and fourth photodetectors 21a and 21d has a 2-sectional configuration with which the occurrence of spherical aberration can be detected by detecting the focus status. Each of the second and third photodetectors 21b and 21c has a 2-sectional configuration with which a focus error signal can be detected by a knife edge method.

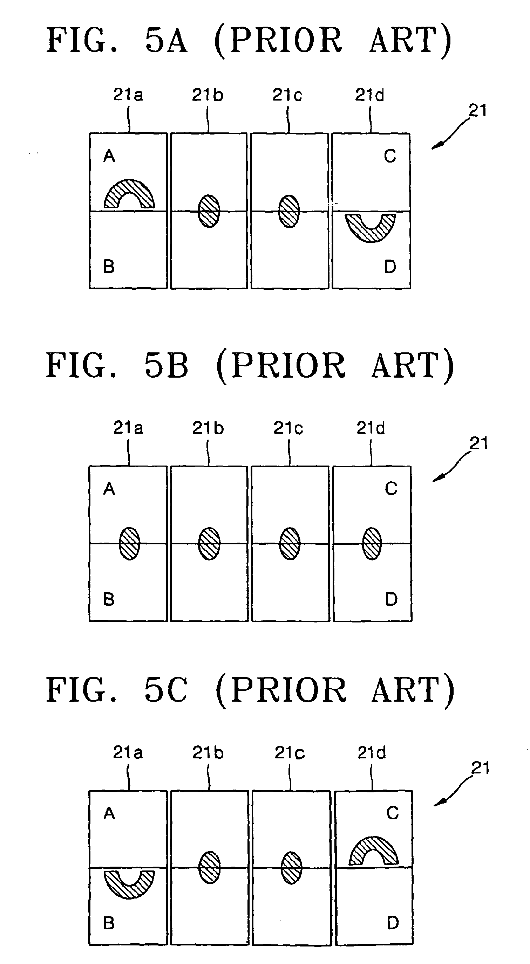

Figures 5A through 5C illustrate the variations of light beam patterns received by the first through fourth photodetectors according to whether wavefront aberration occurs. In particular, Figure 5A shows a light beam pattern received by the first through fourth photodetectors when a retarded wavefront occurs. The retarded wavefront portions, which have been diffracted by the first and second diffraction areas 20a and 20b of the HOE 20, are focused behind the first and fourth photodetectors 21a and 21d. The light beam patterns received by the first and fourth photodetectors 21a and 21d are symmetrical. Relatively higher amplitude signals are detected by the first section A of the first photodetector 21a and the second section D of the fourth photodetector 21d, compared with the second section B of the first photodetector 21a and the first section C of the fourth photodetector 21d. Figure 5B is for a case when no aberration occurs. As shown in Figure 5B, signals having the same magnitude are detected by the first and second sections A and B of the first photodetector 21a. Also, signals having the same amplitude are detected by the first and second sections C and D of the fourth photodetector 21d. Figure 5C illustrates the light beam patterns received by the first through fourth photodetectors 21a through 21d when a leading wavefront occurs. In this case, the leading wavefront portions, which have been diffracted by the first and second diffraction areas 20a and 20b, are focused before the first and fourth photodetectors 21a and 21d. Relatively higher amplitude signals are detected by the second section B of the first photodetector 21a, and the first section C of the fourth photodetector 21d, compared with the first section A of the first photodetector 21a and the second section D of the fourth photodetector 21d.

Thus, a spherical aberration signal SES' is detected by subtracting the sum of the detection signal *b* of the second section B of the first photodetector 21a and the detection signal *c* of the first section C of the fourth photodetector 21d, from the sum of the detection signal a of the first section A of the first photodetector 21a and the detection signal *d* of the second section D of the fourth photodetector 21d, which is expressed as:

$$SES' = (a + d) - (b + c). \qquad \ldots (3)$$

If this conventional aberration detection method is applied, both the amount and the sign of aberration can be detected with respect to a small amount of spherical aberration. Meanwhile, when a large amount of spherical aberration occurs, due to saturation of the signal difference, only the sign of the spherical aberration, not the amount thereof, can be detected.

Another drawback of the conventional aberration detection method lies in that a predetermined amplitude of spherical aberration signal SES' is detected even when only a predetermined amount of defocus occurs without spherical aberration. Defocus $W_{20}$ is proportional to the square of an NA of an objective lens, which is expressed as formula (4), and thus the degree of retarding and leading in wavefronts caused by defocus and spherical aberration differs, but the characteristics of the retarded and leading wavefronts caused by defocus and spherical aberration are very similar.

$$W_{20} = \frac{1}{2} \Delta z N A^2. \qquad \ldots (4)$$

.

where $\Delta z$ is the amount of movement of an image point.

EP-A-0 936 603 discloses an optical head that eliminates a disturbance which occurs in a focus error signal in association with the decentering of an optical disk when an optical spot crosses a track on a storage film surface, and in addition the optical head cancels an off-set which occurs in a tracking error signal in association with the movement of an objective lens.

It is an aim of the present invention to provide an optical pickup capable of accurately detecting spherical aberration caused by thickness variation of a recording medium without being affected by defocus, and/or capable of compensating for such spherical aberration.

According to an aspect of the present invention, there is provided an optical pickup comprising a light source which generates and emits a light beam; an objective lens which focuses an incident light beam from the light source to form a light spot on a recording medium; and an optical path changer disposed on an optical path between the light source and the objective lens, which alters the traveling path of an incident light beam; a light beam division and detection means which divides a particular light beam portion of a light beam passed through the objective lens after having been reflected/diffracted from the recording medium, the intensity distribution of the particular light beam portion being greatly affected by thickness variation of the recording medium, into a plurality of sub-divided light beams portions, and detects the sub-divided light beam portions and a spherical aberration detection circuit which processes a plurality of detection signals resulting from the particular light beam portion output from the light beam division and detection means to detect spherical aberration caused by thickness variation of the recording medium; characterized by the light beam division and detection means, upon receiving the particular light beam portion reflected and diffracted by the recording medium into $0^{th}$-order and $\pm 1^{st}$-order diffracted light beams where the $\pm 1^{st}$-order diffracted light beams partially overlap at the exit pupil of the objective lens, divides the particular light beam portion corresponding to the over lapping portion into a first light beam portion on an axis crossing the optical axis parallel to radial or tangential direction of the recording medium, and second and third light beam portions one at either side of the first light beam portion in the tangential direction or radial direction of the recording medium, and detects a first detection signal from the first light beam portion, and a second detection signal from the second and third light beam portions; and the spherical aberration detection circuit detects the spherical aberration signal by subtracting the second detection signal from the first detection signal.

In this case, the light beam division and detection means may comprise: a hologram optical element having first, second and third pattern areas which divide/diffract the particular light beam portions into the first, second and third light beam portions; and a photodetector unit having a first photodetector which receives the first light beam portion passed through the first pattern area and outputs the first detection signal, and a second photodetector which receives the second and third light beam portions passed through the second and third pattern areas and outputs the second detection signal.

Preferably, the recording medium has a land-groove structure such that a light beam radiated onto the recording medium is reflected and diffracted into $0^{th}$-order and $\pm 1^{st}$-order diffracted light beams, and the $\pm 1^{st}$-order diffracted light beams partially overlap at the exit pupil of the objective lens; the particular light beam portion corresponds to the over-lapping portion of the $\pm 1^{st}$-order diffracted light beams; and the first, second and third pattern areas of the hologram optical element are designed such that the overlapping light beam portion is divided and diffracted into the first light beam portion on the optical axis, and the second and third light beam portions one at either side of the first light beam portion in the tangential direction or radial direction of the recording medium.

The recording medium may have a format satisfying the equation:

$$\frac{\lambda}{2 \; x \; NA \; x \; Gw} < 1$$

where A denotes the wavelength of the light source, NA denotes the numerical aperture of the objective lens, and Gw denotes the groove width of the recording medium.

It is preferable that the photodetector unit further comprises a third photodetector which receives the remaining light beam portion passed through the hologram optical element, excluding the particular light beam portion, and detects an information reproduction signal from the recording medium, a focus error signal, and/or a tracking error signal.

Preferably, the optical pickup further comprises a spherical aberration compensation element on an optical path between the light path changer and the objective lens, which is driven according to the spherical aberration signal detected by the spherical aberration detection circuit, to correct spherical aberration caused by thickness variation of the recording medium.

For a better understanding of the invention, and to show how embodiments of the same may be carried into effect, reference will now be made, by way of example, to the accompanying diagrammatic drawings in which:

Figure 1 is a graph showing the relation between the thickness deviation of a recording medium and wavefront aberration (optical path difference (OPD)) caused by the thickness deviation;

Figure 2 illustrates a conventional optical pickup capable of detecting and correcting spherical aberration;

Figure 3 illustrates wavefront aberration caused by spherical aberration;

Figure 4 illustrates configurations of the hologram and photodetector unit of Figure 2;

Figures 5A through 5C illustrate variations of light beam patterns received by the photodetector unit of Figure 4 according to whether aberration occurs;

Figure 6 illustrates the optical arrangement of a preferred embodiment of an optical pickup according to the present invention;

Figure 7 illustrates light beams reflected/diffracted by a next generation DVD family land/groove type recording medium, viewed from the exit pupil of the objective lens of an optical pickup;

Figures 8A through 10C illustrate changes of the reflected/diffracted light beams of Figure 7 according to aberration;

Figure 11 illustrates an example of the light beam divider and detection means of the optical pickup of Figure 6, suitable for use with a next generation DVD family land/groove recording medium;

Figure 12 is a graph of a spherical aberration signal detected by a spherical aberration detection circuit of the present invention with respect to spherical aberration;

Figure 13 is a graph of the amplitude of a spherical aberration signal detected by a spherical aberration detection circuit of the present invention with respect to defocus; and

Figures 14A through 14C illustrate the intensity distribution of the reflected/diffracted light beam of Figure 7 when defocus occurs.

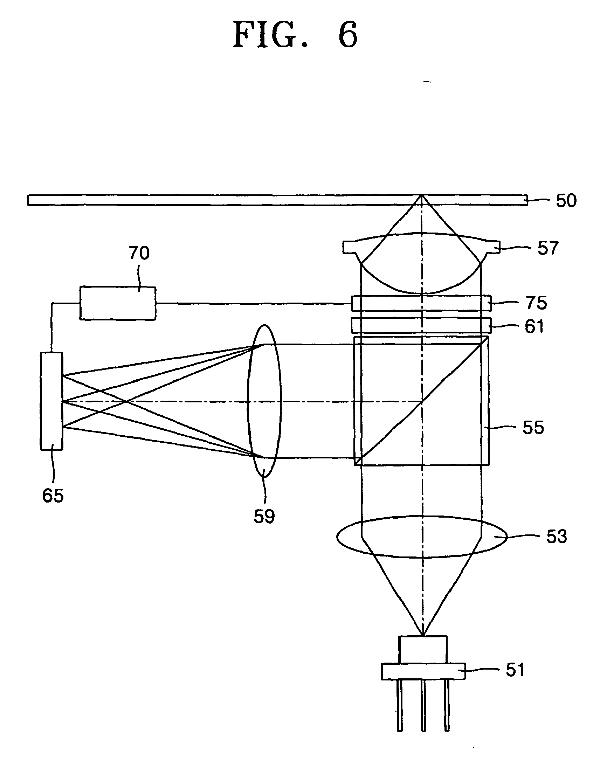

The optical arrangement of a preferred embodiment of an optical pickup according to the present invention is illustrated in Figure 6. Referring to Figure 6, the preferred embodiment of the optical pickup according to the present invention includes a light source 51 which generates and emits a light beam, an objective lens 57 which focuses an incident light beam emitted from the light source 51 to form a light spot on a recording medium 50, an optical path changer on an optical path between the light source 51 and the objective lens 57, which alters the traveling path of an incident light beam, a light beam division and detection means which divides and detects the light beam passed back through the objective lens after having been reflected/diffracted by the optical recording medium, and a spherical aberration detection circuit 70 which detects a spherical aberration signal according to thickness variations of the recording medium 50 by processing a plurality of detection signals from the light beam division and detection means.

The light source 51 may be a semiconductor laser such as an edge emitting laser or a vertical cavity surface emitting laser (VCSEL). As the optical path changer, a beam splitter 55 for transmitting and reflecting an incident light beam in a predetermined ratio can be used. Alternatively, the optical path changer may be a combination of a polarizing beam splitter (not shown) which selectively transmits or reflects an incident light beam according to the polarization of the incident light beam, and a quarter-wave plate (not shown) which changes the phase of an incident light beam between the polarization beam splitter and the objective lens 57.

To use the optical pickup according to the present invention for recording and reproduction with a next generation DVD family recording medium 50, a blue-light semiconductor laser which emits a beam having a wavelength of 400-420 nm, and preferably about 405 nm, is used as the light source 51, and a condensing lens having an NA of 0.7 or greater, and preferably an NA of 0.85, is used as the objective lens 57.

Preferably, the optical pickup according to the present invention further includes a collimating lens 53 on the optical path between the light source 51 and the beam splitter 55, for collimating diverging light beam emitted from the light source 51, and a sensing lens 59 on an optical path between the beam splitter 55 and the photodetector unit 65 of the light beam division and detection means, as will be described below, for condensing an incident light beam such that the light beam is received by the photodetector unit 65.

The light beam division and detection means divides a particular light beam portion of the incident beam passed back through the objective lens 50 after having been reflected/diffracted from the recording medium 50, the intensity distribution of the particular light beam portion being greatly affected by thickness variations of the recording medium, into a plurality of sub-divided light beam portions, and detects the plurality of the sub-divided light beam portions.

In particular, as described below, the variation of intensity distribution of the particular light beam portion according to the direction of spherical aberration is symmetrical about an axis crossing the optical axis parallel to the tangential or radial direction of the recording medium. The intensity distribution of the particular light beam is inversed according to the direction of spherical aberration. It is preferable that the light beam division and detection means divides the particular light beam portion into a first light beam portion on the axis crossing the optical axis parallel to the radial or tangential direction, and second and third light beam portions around the first light beam portion in the tangential or radial direction of the recording medium, and detects the first, second and third light beam portions to generate a first detection signal from the first light beam portion, and a second detection signal from the second and third light beam portions.

In a preferred embodiment of the present invention, the light beam division and detection means includes a hologram optical element (HOE) 61 which divides/ diffracts the particular light beam portion into the first, second and third light beam portions, and the photodetector unit 65 which receives the first, second, and third light beam portions divided/diffracted by the HOE 61 and outputs a first detection signal with respect to the first light beam portion, and a second detection signal with respect to the second and third light beam portions. The HOE 61 may be arranged between the beam splitter 55 and the objective lens 57.

It is preferable that the photodetector unit 65 is constructed such that the rest of the light beam portion excluding the particular light beam portion from the HOE 61 is separately received by the photodetector unit 65. In this case, a detection signal output from the photodetector unit 65 for the particular light beam portion is used to detect a spherical aberration signal, and a detection signal output from the photodetector unit 65 for the rest of the light beam portion is used to detect an information reproduction signal. It will be appreciated that an information reproduction signal can also be detected from the particular light beam portion, instead of from the rest of the light beam portion. Alternatively, as the light beam division and detection means, a photodetector with a divided configuration corresponding to the HOE 61 can be used.

The spherical aberration detection circuit 70 detects a spherical aberration signal according to the thickness variation of the recording medium by processing a plurality of detection signals resulting from the particular light beam portion, which are output from the light beam division and detection means. Here, the spherical aberration signal is not affected by defocus.

The spherical aberration detection circuit 70 normalizes a subtraction signal obtained by subtracting a second detection signal resulting from the second and third light beam portions from a first detection signal resulting from the first light beam portion, the first and second detection signals being output from the light beam division and detection means, with respect to the sum of the first and second detection signals, so that a spherical aberration signal SES is detected. Alternatively, the spherical aberration detection circuit 70 can be constructed such that a spherical aberration signal SES is detected by just subtracting the second detection signal from the first detection signal. Here, the spherical aberration detection circuit 70 may be constructed such that a spherical aberration signal is detected by amplifying at least one of the first and second detection signals with a predetermined gain factor and then by processing the results.

Meanwhile, the optical pickup according to the present invention preferably includes a spherical aberration compensation element 75 on the optical path between the HOE 61 and the objective lens 57, which compensates for spherical aberration caused by thickness variation of the recording medium 50 according to the spherical aberration signal SES detected by the spherical aberration detection circuit 70.

As the spherical aberration compensation element 75, a liquid crystal plate manufactured by injecting liquid crystals between two transparent substrates having electrode patterns can be used. Due to the anisotropic property of liquid crystal with respect to refractive index, the phase of the light beam passing through the liquid crystal plate changes. In particular, the liquid crystal plate is driven according to the spherical aberration signal SES such that the shape of the wavefront of the incoming light beam is changed into the inverse shape of the spherical aberration caused by thickness variation of the recording medium 50, thereby compensating for the spherical aberration caused by thickness variation. In this case, a driving circuit which drives the spherical aberration compensation element 75 may be included in or separately from the spherical aberration detection circuit 70.

Preferred embodiments of the light beam division and detection means of the optical pickup according to the present invention, which has the configuration described above to detect and/or correct spherical aberration, will be described below with reference to the case of using a next generation DVD family recording medium with lands and grooves (hereinafter, referred to as "land-groove type recording medium) as the recording medium 50. The land-groove type recording medium has a format satisfying the equation:

$$\frac{\lambda}{2 \, x \, NA \, x \, Gw} < 1$$

where A denotes the wavelength of the light source 51, *NA* denotes the numerical aperture of the objective lens 57, and *Gw* denotes the groove width of the recording medium.

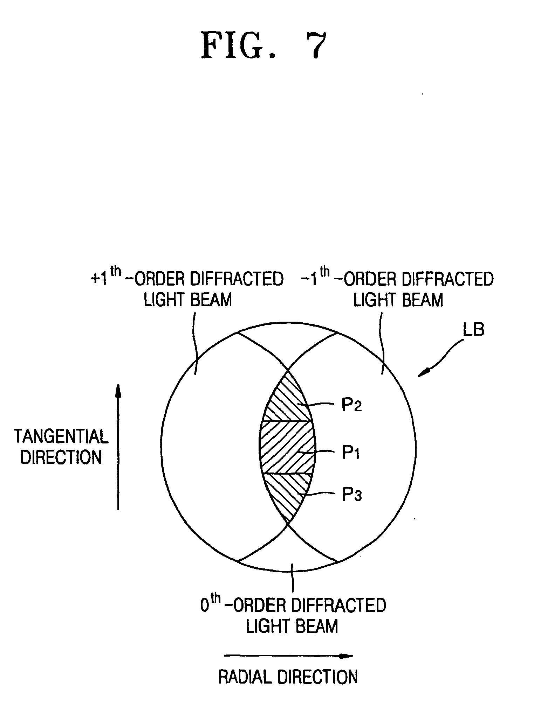

The land-groove type recording medium reflects and diffracts an incident light beam into $0^{th}$ order light beam and $\pm 1^{st}$ order light beams in the radial direction. As a result, as shown in Figure 7, when the light beam LB reflected/ diffracted from the recording medium is viewed from the exit pupil of the objective lens 57, the $\pm 1^{st}$ order diffracted light beams partially overlap.

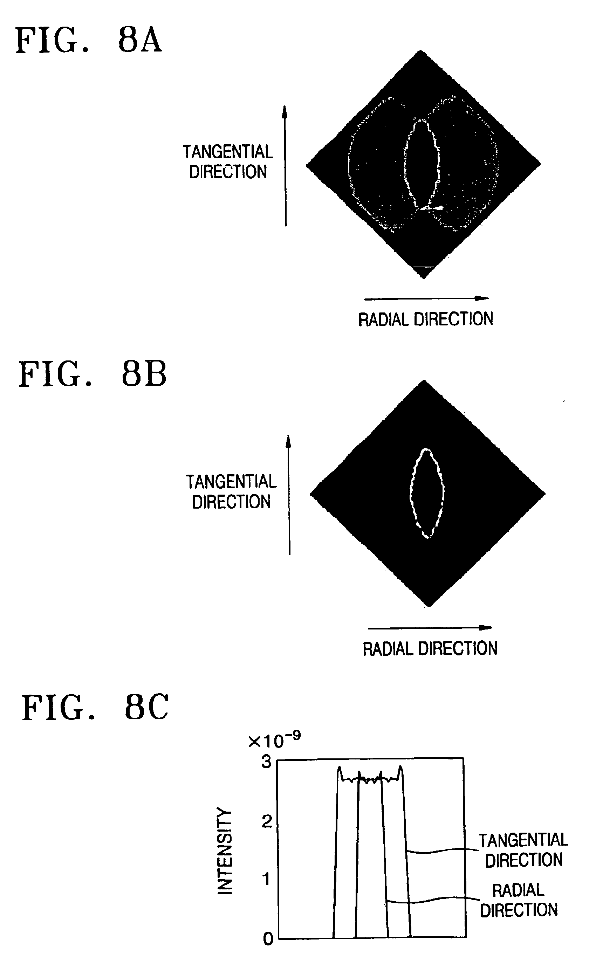

Figures 8A through 10C illustrate the changes of the light beam deflected/diffracted from the land-groove type recording medium according to whether aberration occurs or not. In particular, Figures 8A, 9A and 10A illustrate the profiles of the reflected/diffracted light beam LB viewed from the exit pupil of the objective lens 57. Figures 8B, 9B and 10B are magnified views of Figures 8A, 9A and 10A, respectively, illustrating an overlapping portion of the $\pm 1^{st}$ order diffracted light beams (hereinafter, referred to as "overlapping light beam portion"). Figures 8C, 9C and 10C illustrate the distribution of intensity of the overlapping light beam portion in the tangential and radial directions.

As shown in Figures 8A through 10C, the intensity distribution of the overlapping light beam portion is almost uniform when no aberration occurs (also almost uniform with respect to defocus, as will be described later). Meanwhile, when spherical aberration occurs, the intensity distribution of the overlapping light beam portion has a Gaussian distribution or an inverse Gaussian distribution depending on the sign of aberration.

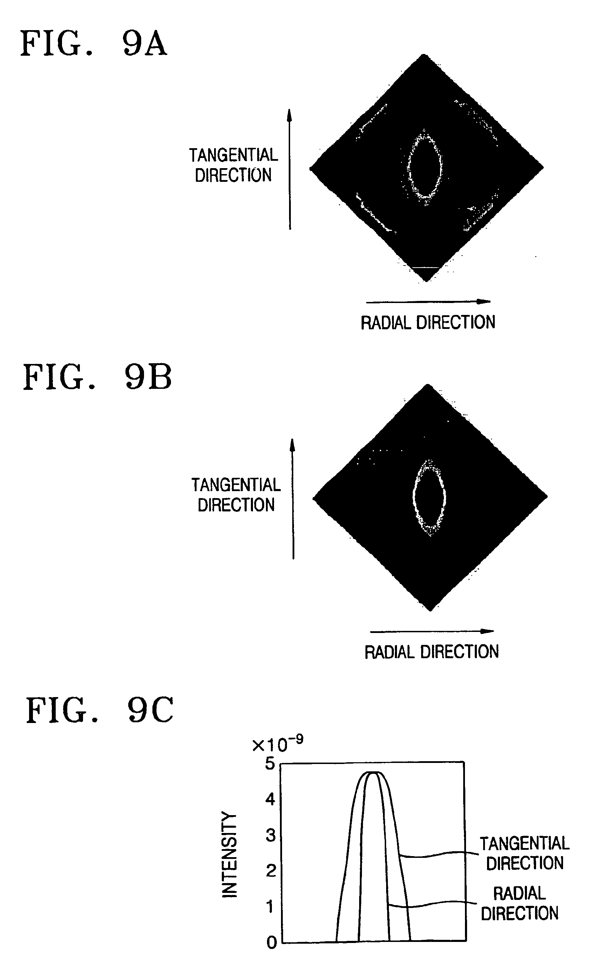

In particular, as shown in Figures 8A, 8B and 8C, in the case where no aberration occurs, the distribution of intensity of the overlapping light beam portion is almost uniform. Meanwhile, in the case where a predetermined amount of spherical aberration, for example, $W_{40d} = 0.9393 \lambda$, occurs, the overlapping light beam portion has a Gaussian intensity distribution, as shown in Figures 9A, 9B and 9C, in which the center portion has a peak intensity, and the intensity of the light beam exponentially decreases with increased distance from the center portion. In the case where spherical aberration occurs in the opposite direction to that of Figures 9A, 9B and 9C, i.e., $W_{40d} = -0.9393 \lambda$, the overlapping light beam portion has an inverse Gaussian distribution, in which the center portion has the lowest intensity and the intensity of the light beam exponentially increases with increased distance from the center portion. In other words, the overlapping light beam portion has a symmetrical intensity distribution around the optical axis, but positive spherical aberration and negative spherical aberration result in intensity distributions having opposite profiles.

When the land-groove type recording medium described above is used as the recording medium 50 and no aberration occurs, the distribution of the overlapping light beam portion is uniform. Thus, it is preferable that the light beam division and detection means divides/diffracts the overlapping light beam portion into, for example, a first light beam portion $P_1$ on the optical axis (see Figure 7), and second and third light beam portions $P_2$ and $P_3$ around the first light beam portion $P_1$, in an equal area ratio, and detects signals resulting from the first, second and third light beam portions $P_1$, $P_2$ and $P_3$. The spherical aberration detection circuit 70 is constructed such that a spherical aberration signal is detected by subtracting a second detection signal resulting from the second and third light beam portions $P_2$ and $P_3$ from a first detection signal resulting from the first light beam portion $P_1$.

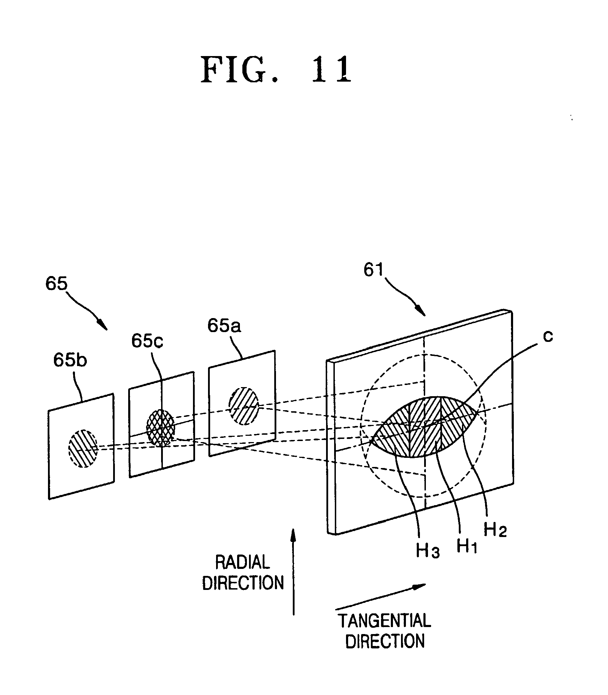

To this end, the HOE 61 of the light beam division and detection means includes a first pattern area $H_1$ which diffracts/deflects the first light beam portion $P_1$ on the optical axis $c$, and second and third pattern areas $H_2$ and $H_3$ which diffract/deflect the second and third light beam portions $P_2$ and $P_3$, as shown in Figure 11. In this case, since the second and third light beam portions $P_2$ and $P_3$ have similar intensity profiles, it is preferable that the second and third pattern areas $H_2$ and $H_3$ are formed as the same hologram pattern, so that the second and third light beam portions $P_2$ and $P_3$ are received by a single photodetector.

The photodetector unit 65 includes a first photodetector 65a which receives the first light beam portion $P_1$ diffracted/deflected from the first pattern area $H_1$, and a second photodetector 65b which receives the second and third light beam portions $P_2$ and $P_3$ focused at the same location by the condensing lens 59 after having been diffracted/deflected in the same direction by the first and second pattern areas $H_2$ and $H_3$.

A first detection signal Pi output from the first photodetector 65a, and a second detection signal Po output from the second photodetector 65b are input to the spherical aberration detection circuit 70. The spherical aberration detection circuit 70 normalizes, for example, a difference signal (Pi-Po) of the first and second detection signal Pi and Po with respect to the sum signal (Pi+Po) and outputs a spherical aberration signal SES expressed as (Pi-Po)/(Pi+Po).

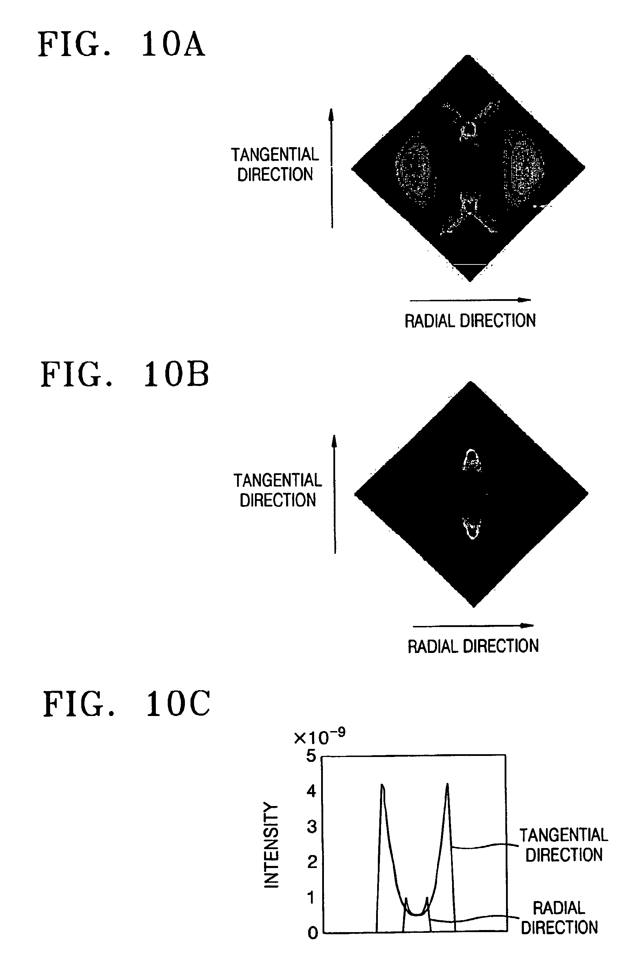

In Figure 11, the HOE 61 is designed to divide and diffract the overlapping light beam portion into the first light beam portion $P_1$ on the optical axis $c$, and the second and third light beam portions $P_2$ and $P_3$ which are symmetrical around the first light beam portion $P_1$ in the tangential direction, and the photodetector unit 65 is designed to be suitable for the HOE 61. As shown in Figures 9C and 10C, the intensity distribution of the overlapping light beam portion is symmetrical around the optical axis in the radial direction as well as in the tangential direction of recording medium, and positive spherical aberration and negative spherical aberration lead to intensity distributions having opposite profiles, the light beam division and detection means of the optical pickup according to the present invention may be designed such that the overlapping light beam portion is divided in the radial direction and then detected by the light beam division and detection means.

The optical pickup according to the present invention which has the light beam division and detection means described above can detect a spherical aberration signal SES as follows without being affected by defocus.

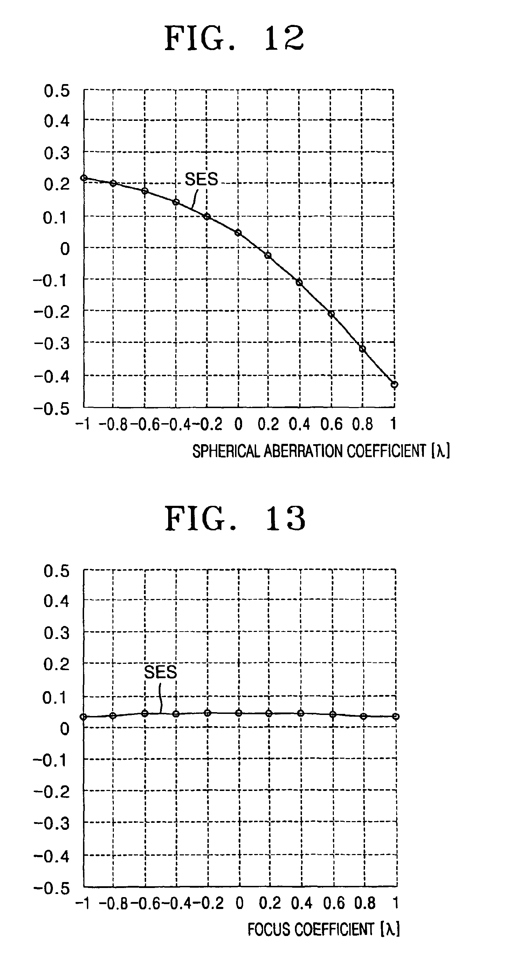

Figure 12 is a graph of a spherical aberration signal SES detected by the spherical aberration detection circuit 70 with respect to spherical aberration. Here, the horizontal axis represents a coefficient of spherical aberration representing the amount of spherical aberration in units of $\lambda$. Figure 13 is a graph of a spherical aberration signal SES detected by the spherical aberration detection circuit 70 with respect to defocus. Here, the horizontal axis represents a coefficient of defocus representing the amount of defocus in units of $\lambda$.

As shown in Figure 12, the spherical aberration signal decreases as the amount of spherical aberration increases from negative values to positive values. The sign of the spherical aberration signal SES is inverted around a point at which the spherical aberration coefficient is zero, according to the direction of spherical aberration. The spherical aberration signal SES has negative values for the spherical aberration in a positive direction and positive values for the spherical aberration in a negative direction.

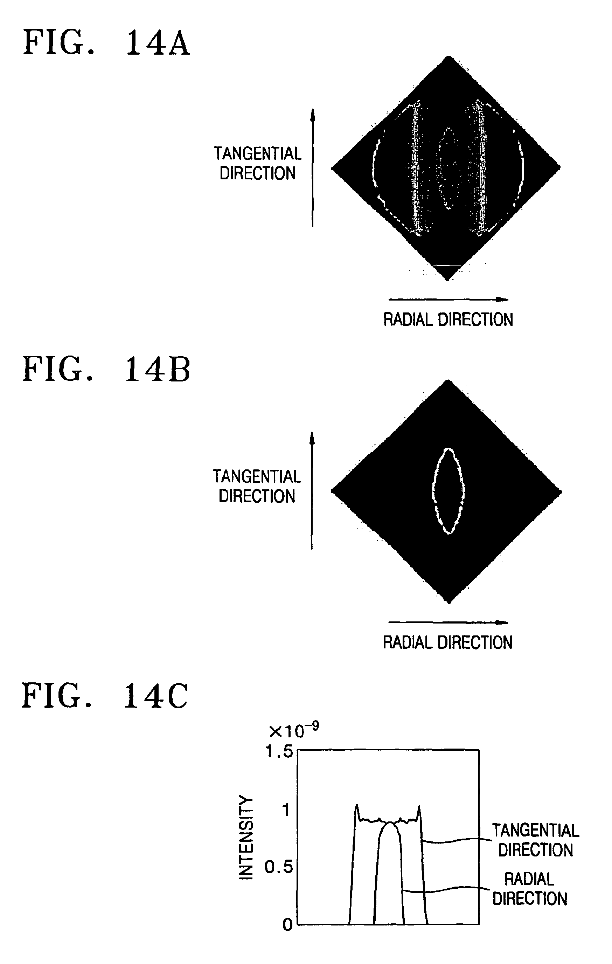

Meanwhile, the spherical aberration signal SES is not affected by defocus, as shown in Figure 13. This is also evident in Figures 14A through 14C which illustrate the profile and intensity distribution of the light beam reflected/diffracted from a land-groove type recording medium when only a predetermined amount of defocus ($W_{20} = 0.2425\lambda$) occurs without spherical aberration. As shown in Figures 14A through 14C, although a predetermined amount of defocus ($W_{20} = 0.2425\lambda$) occurs, the intensity distribution of the overlapping light beam portion almost does not change, unlike when spherical aberration occurs. In other words, if only defocus occurs without spherical aberration, the intensity of the overlapping light beam portion is constant in the tangential direction, but slightly varies in the radial direction. However, such minor intensity variation in the radial direction is negligible compared with the intensity variation caused by spherical aberration, and thus the intensity distribution of the overlapping light beam portion is almost uniform in every direction.

The offsets of the spherical aberration signal SES when no spherical aberration occurs and when defocus occurs, as shown in Figures 12 and 13, respectively, can be eliminated by dividing the light beam into the first, second and third light beam portions $P_1$, $P_2$ and $P_3$ in an optimal ratio, or by designing the spherical aberration detection circuit 70 such that the spherical aberration detection signal SES is detected by amplifying at least one of the first and second detection signals Pi and Po with a predetermined gain factor and then processing the detection signals.

Therefore, the optical pickup according to the present invention can accurately detect a spherical aberration signal SES using the light beam division and detection means and the spherical aberration detection circuit 70 described above, without being affected by defocus. In the present invention, the spherical aberration signal is detected using a plurality of light beam portions divided from the particular light beam portion (i.e., the overlapping light beam portion of ±1st order diffracted light beams for a land-groove type recording medium) that is greatly affected by spherical aberration. Thus, even when spherical aberration greater than a predetermined amount occurs, the spherical aberration can be accurately detected without the problem of signal difference saturation as in a conventional detection technique.

Thus, both the amount and the sign of spherical aberration caused by thickness variation of the recording medium can be accurately detected using the light beam division and detection means and the spherical aberration detection circuit 70 according to the present invention. In addition, by driving the spherical aberration compensation element 75 according to the detected spherical aberration signal SES, spherical aberration caused by thickness variation of the recording medium 50 can be corrected.

Meanwhile, the HOE 61 and the photodetector unit 65 can detect an information reproduction signal from the recording medium 50, a focus error signal, and/or a tracking error signal, using the detection signal resulting from the rest of the light beam portion excluding the particular light beam portion. For example, when the above-described land-groove type recording medium is used as the recording medium 50, the HOE 61 is designed such that the light beam portion entering through the peripheral area exclusive of the first, second and third pattern areas $H_1$, $H_2$ and $H_3$ is transmitted. At the same time, the photodetector unit 65 is designed such that the photodetector unit 65 further includes a third photodetector 65c, as shown in Figure 11, which receives the light beam portion just transmitted through the HOE 61. In this case, the third photodetector 65c preferably has a divided configuration including at least 4 sections to detect a focus error signal and/or a tracking error signal.

Although the preferred embodiments of the present invention are described with reference to the light beam division and detection means designed for recording and reproduction with a future generation DVD family land-groove type recording medium, it will be appreciated that the configuration of the light beam division and detection means can be modified for any recording medium with various formats.

The configuration of the optical pickup according to the present invention of Figure 6, which can detect and/or correct spherical aberration caused by thickness variation of the recording medium 50, is merely illustrative and is not intended to limit the scope of the present invention.

While this invention has been particularly shown and described with reference to preferred embodiments thereof, it will be understood by those skilled in the art that various changes in form and details may be made thereto without departing from the scope of the invention as defined by the appended claims.

**Claims**

1. An optical pickup, comprising:

   a light source (51) which generates and emits a light beam;
   an objective lens (57) which focuses an incident light beam from the light source to form a light spot on a recording medium (50); and
   an optical path changer (55) disposed on an optical path between the light source and the objective lens, which alters the traveling path of an incident light beam;
   a light beam division and detection means (61,65) which divides a particular light beam portion of a light beam passed through the objective lens (57) after having been reflected/diffracted from the recording medium (50), the intensity distribution of the particular light beam portion being greatly affected by thickness variation of the recording medium, into a plurality of sub-divided light beams portions, and detects the sub-divided light beam portions; and

a spherical aberration detection circuit (70) which processes a plurality of detection signals resulting from the particular light beam portion output from the light beam division and detection means to detect spherical aberration caused by thickness variation of the recording medium;

**characterized by**:

the light beam division and detection means (61,65), upon receiving the particular light beam portion reflected and diffracted by the recording medium (50) into $0^{th}$-order and $\pm 1^{st}$-order diffracted light beams where the $\pm 1^{st}$-order diffracted light beams partially overlap at the exit pupil of the objective lens (57), divides the particular light beam portion corresponding to the overlapping portion into a first light beam portion on an axis crossing the optical axis parallel to radial or tangential direction of the recording medium, and second and third light beam portions one at either side of the first light beam portion in the tangential direction or radial direction of the recording medium, and detects a first detection signal from the first light beam portion, and a second detection signal from the second and third light beam portions; and

the spherical aberration detection circuit (70) detects the spherical aberration signal by subtracting the second detection signal from the first detection signal.

2. The optical pickup of claim 1, wherein the light beam division and detection means comprises:

a hologram optical element (61) having first, second and third pattern areas which divide/diffract the particular light beam portions into the first, second and third light beam portions; and

a photodetector unit (65) having a first photodetector which receives the first light beam portion passed through the first pattern area and outputs the first detection signal, and a second photodetector which receives the second and third light beam portions passed through the second and third pattern areas and outputs the second detection signal.

3. The optical pickup of claim 2, wherein the recording medium (50) has a land-groove structure such that a light beam radiated onto the recording medium is reflected and diffracted into $0^{th}$-order and $+1^{st}$-order diffracted light beams, and the $+1^{st}$-order diffracted light beams partially overlap at the exit pupil of the objective lens (57); the particular light beam portion corresponds to the overlapping portion of the $\pm 1^{st}$-order diffracted light beams; and the first, second and third pattern areas of the hologram optical element (61) are designed such that the overlapping light beam portion is divided and diffracted into the first light beam portion on the optical axis, and the second and third light beam portions one at either side of the first light beam portion in the tangential direction or radial direction of the recording medium.

4. The optical pickup of claim 3, wherein the recording medium has a format satisfying the equation:

$$\frac{\lambda}{2 \times NA \times Gw} < 1$$

where A denotes the wavelength of the light source, $NA$ denotes the numerical aperture of the objective lens, and $Gw$ denotes the groove width of the recording medium.

5. The optical pickup of any of claims 2 through 4, wherein the photodetector unit (65) further comprises a third photodetector which receives the remaining light beam portion passed through the hologram optical element (61), excluding the particular light beam portion, and detects an information reproduction signal from the recording medium, a focus error signal, and/or a tracking error signal.

6. The optical pickup of any of claims 2 through 4, wherein the second and third pattern areas have the same hologram pattern, and the first pattern area has a hologram pattern different from the first and second pattern areas.

7. The optical pickup of claim 1, wherein the recording medium (50) includes lands and grooves such that a light beam radiated onto the recording medium is reflected and diffracted into $0^{th}$-order and $\pm 1^{st}$-order diffracted light beams, and spots by the $\pm 1^{st}$-order diffracted light beams partially overlap at the exit pupil of the objective lens; and the particular light beam portion corresponds to the overlapping portion of the $\pm 1^{st}$-order diffracted light beams.

8. The optical pickup of claim 7, wherein the recording medium has a format satisfying the equation:

$$\frac{\lambda}{2 \, x \, NA \, x \, Gw} < 1$$

where A denotes the wavelength of the light source, *NA* denotes the numerical aperture of the objective lens, and Gw denotes the groove width of the recording medium.

9. The optical pickup of any of claims 1 through 4, and claims 7 and 8, wherein the spherical aberration detection circuit (70) detects the spherical aberration signal by normalizing a difference signal obtained by subtracting the second detection signal from the first detection signal, with respect to the sum of the first and second detection signals.

10. The optical pickup of claim 9, wherein the spherical aberration detection circuit (70) amplifies at least one of the first and second detection signals with a predetermined gain factor, and processes the results to detect the spherical aberration signal.

11. The optical pickup of any of claims 1 through 4, and claims 7 and 8, wherein the spherical aberration detection circuit amplifies at least one of the first and second detection signals with a predetermined gain factor, and processes the results to detect the spherical aberration signal.

12. The optical pickup of any of claims 1, 7 and 8, wherein the light beam division and detection means (61,65) detects an information reproduction signal from the recording medium, a focus error signal, and/or a tracking error signal, using the detection signal resulting from the remaining light beam portion excluding the particular light beam portion.

13. The optical pickup of any preceding claim, further comprising a spherical aberration compensation element (75) on an optical path between the light path changer (55) and the objective lens (57), which is driven according to the spherical aberration signal detected by the spherical aberration detection circuit (70), to correct spherical aberration caused by thickness variation of the recording medium.


**Patentansprüche**

1. Optischer Abtaster, enthaltend:

   eine Lichtquelle (51), die einen Lichtstrahl erzeugt und emittiert;
   eine Objektivlinse (57), die einen einfallenden Lichtstrahl von der Lichtquelle bündelt, um einen Lichtpunkt auf einem Aufzeichnungsmedium (50) zu bilden; und
   eine Vorrichtung (55) zum Ändern des optischen Weges, die auf einem optischen Weg zwischen der Lichtquelle und der Objektivlinse angeordnet ist und den Ausbreitungsweg eines einfallenden Lichtstrahls ändert;
   eine Lichtstrahl-Teil- und Erfassungseinrichtung (61, 65), die einen einzelnen Lichtstrahlteil eines Lichtstrahls, der die Objektivlinse (57) durchlaufen hat, nachdem er vom Aufzeichnungsmedium (50) reflektiert/gebeugt wurde, wobei die Intensitätsverteilung des einzelnen Lichtstrahlteils in starkem Maße durch die Dickenschwankung des Aufzeichnungsmediums beeinflusst wird, in eine Vielzahl von unterteilten Lichtstrahlteilen teilt und die unterteilten Lichtstrahlteile erfasst; und
   eine Schaltung (70) zum Erfassen einer sphärischen Aberration, die eine Vielzahl von Erfassungssignalen, die aus dem einzelnen Lichtstrahlteil resultieren, der aus der Lichtstrahl-Teil- und Erfassungseinrichtung ausgegeben wird, verarbeitet, um eine sphärische Aberration zu erfassen, die durch die Dickenschwankung des Aufzeichnungsmediums verursacht wird;
   **dadurch gekennzeichnet, dass**:
   die Lichtstrahl-Teil- und Erfassungseinrichtung (61, 65) beim Empfangen des einzelnen Lichtstrahlteils, der vom Aufzeichnungsmedium (50) reflektiert und zu gebeugten Lichtstrahlen 0ter Ordnung und ±1ter Ordnung gebeugt wurde, wobei die gebeugten Lichtstrahlen der ±1ten Ordnung an der Austrittspupille der Objektivlinse (57) teilweise überlappen, den einzelnen Lichtstrahlteil gemäß dem überlappenden Teil in einen ersten Lichtstrahlteil auf einer Achse, die die optische Achse kreuzt, die parallel zur radialen oder tangentialen Richtung des Aufzeichnungsmediums verläuft, und einen zweiten sowie dritten Lichtstrahlteil teilt, von denen sich jeweils einer auf jeder Seite des ersten Lichtstrahlteils in der tangentialen Richtung oder der radialen Richtung des Aufzeichnungsmediums befindet, und ein erstes Erfassungssignal vom ersten Lichtstrahlteil und ein zweites Erfassungssignal vom zweiten und dritten Lichtstrahlteil erfasst und
die Schaltung (70) zum Erfassen einer sphärischen Aberration das Signal der sphärischen Aberration erfasst, indem sie das zweite Erfassungssignal vom ersten Erfassungssignal subtrahiert.

2. Optischer Abtaster nach Anspruch 1, bei dem die Lichtstrahl-Teil- und Erfassungseinrichtung enthält:

ein optisches Hologrammelement (61) mit einer ersten, einer zweiten und einer dritten Musterfläche, die die einzelnen Lichtstrahlteile in den ersten, den zweiten und den dritten Lichtstrahlteil teilen/beugen, und
eine Fotodetektoreinheit (65) mit einem ersten Fotodetektor, der den ersten Lichtstrahlteil empfängt, der die erste Musterfläche durchlaufen hat, und das erste Erfassungssignal ausgibt, und einem zweiten Fotodetektor, der den zweiten und den dritten Lichtstrahlteil empfängt, die die zweite und die dritte Musterfläche durchlaufen haben, und das zweite Erfassungssignal ausgibt.

3. Optischer Abtaster nach Anspruch 2, wobei das Aufzeichnungsmedium (50) eine Flächen-Rillen-Struktur aufweist, so dass ein Lichtstrahl, der auf das Aufzeichnungsmedium gestrahlt wird, reflektiert und in gebeugte Lichtstrahlen 0ter Ordnung und $\pm$1ter Ordnung gebeugt wird und die gebeugten Lichtstrahlen $\pm$1 ter Ordnung an der Ausgangspupille der Objektivlinse (57) überlappen, der einzelne Lichtstrahlteil dem überlappenden Teil der gebeugten Lichtstrahlen $\pm$1ter Ordnung entspricht und die erste, die zweite sowie die dritte Musterfläche des optischen Hologrammelementes (61) derart beschaffen sind, dass der überlappende Lichtstrahlteil in den ersten Lichtstrahlteil, der sich auf der optischen Achse befindet, und den zweiten sowie dritten Lichtstrahlteil geteilt wird, von denen sich einer auf jeder Seite des ersten Lichtstrahlteils in der tangentialen Richtung oder radialen Richtung des Aufzeichnungsmediums befindet.

4. Optischer Abtaster nach Anspruch 3, wobei das Aufzeichnungsmedium ein Format hat, das folgende Gleichung erfüllt:

$$\frac{\lambda}{2 \times NA \times Gw} < 1,$$

wobei $\lambda$ die Wellenlänge der Lichtquelle, NA die numerische Apertur der Objektivlinse und Gw die Rillenbreite des Aufzeichnungsmediums kennzeichnet.

5. Optischer Abtaster nach einem der Ansprüche 2 bis 4, bei dem die Fotodetektoreinheit (65) weiterhin einen dritten Fotodetektor enthält, der den übrigen Lichtstrahlteil, der das optische Hologrammelement (61) durchlaufen hat, ausschließlich des einzelnen Lichtstrahlteils empfängt und ein Informations-Wiedergabesignal vom Aufzeichnungsmedium, ein Brennpunktfehlersignal und/oder ein Nachführfehlersignal erfasst.

6. Optischer Abtaster nach einem der Ansprüche 2 bis 4, bei dem die zweite und die dritte Musterfläche dasselbe Hologrammmuster haben und die erste Musterfläche ein Hologrammmuster aufweist, das sich von der ersten und der zweiten Musterfläche unterscheidet.

7. Optischer Abtaster nach Anspruch 1, wobei das Aufzeichnungsmedium (50) Flächen und Rillen enthält, so dass ein Lichtstrahl, der auf das Aufzeichnungsmedium gestrahlt wird, reflektiert und in gebeugte Lichtstrahlen 0ter Ordnung und $\pm$1ter Ordnung gebeugt wird, und Punkte durch die gebeugten Lichtstrahlen der $\pm$1ten Ordnung an der Austrittspupille der Objektivlinse teilweise überlappen und der einzelne Lichtstrahlteil dem überlappenden Teil der gebeugten Lichtstrahlen der $\pm$1ten Ordnung entspricht.

8. Optischer Abtaster nach Anspruch 7, wobei das Aufzeichnungsmedium ein Format hat, das folgende Gleichung erfüllt:

$$\frac{\lambda}{2 \times NA \times Gw} < 1,$$

wobei λ die Wellenlänge der Lichtquelle, NA die numerische Apertur der Objektivlinse und Gw die Rillenbreite des Aufzeichnungsmediums kennzeichnet.

9. Optischer Abtaster nach einem der Ansprüche 1 bis 4 sowie der Ansprüche 7 und 8, bei dem die Schaltung (70) zum Erfassen der sphärischen Aberration das Signal der sphärischen Aberration erfasst, indem sie ein Differenzsignal, das man durch Subtrahieren des zweiten Erfassungssignals vom ersten Erfassungssignal erhält, im Bezug auf die Summe des ersten und des zweiten Erfassungssignals normalisiert.

10. Optischer Abtaster nach Anspruch 9, bei dem die Schaltung (70) zum Erfassen der sphärischen Aberration das erste und/oder das zweite Erfassungssignal mit einem vorgegebenen Verstärkungsfaktor verstärkt und die Ergebnisse verarbeitet, um das Signal der sphärischen Aberration zu erfassen.

11. Optischer Abtaster nach einem der Ansprüche 1 bis 4 sowie der Ansprüche 7 und 8, bei dem die Schaltung zum Erfassen der optischen Aberration das erste und/oder das zweite Erfassungssignal mit einem vorgegebenen Verstärkungsfaktor verstärkt und die Ergebnisse verarbeitet, um das Signal der sphärischen Aberration zu erfassen.

12. Optischer Abtaster nach einem der Ansprüche 1, 7 und 8, bei dem die Lichtstrahl-Teil und Erfassungseinrichtung (61, 65) ein Informations-Wiedergabesignal vom Aufzeichnungsmedium, ein Brennpunktfehlersignal und/oder ein Nachführfehlersignal mit Hilfe des Erfassungssignals erfasst, das aus dem übrigen Lichtstrahlteil ausschließlich dem einzelnen Lichtstrahlteil resultiert.

13. Optischer Abtaster nach einem der vorhergehenden Ansprüche, weiterhin enthaltend ein Element (75) zum Kompensieren der sphärischen Aberration, das sich auf einem optischen Weg zwischen der Vorrichtung (55) zum Ändern des optischen Weges und der Objektivlinse (57) befindet und gemäß dem Signal der Weges und der Objektivlinse (57) befindet und gemäß dem Signal der sphärischen Aberration, das von der Schaltung (70) zum Erfassen der optischen Aberration erfasst wird, angesteuert wird, um die sphärische Aberration zu korrigieren, die durch Dickenschwankungen des Aufzeichnungsmediums erzeugt werden.

**Revendications**

1. Tête de lecture optique, comprenant :

   une source de lumière (51) qui génère et émet un faisceau lumineux ;
   une lentille de focalisation (57) qui focalise un faisceau lumineux incident provenant de la source de lumière pour former une tâche de lumière sur un support d'enregistrement (50) ; et
   un dispositif de changement de chemin optique (55) disposé sur un chemin optique entre la source de lumière et la lentille de focalisation, qui modifie le chemin de déplacement d'un faisceau lumineux incident ;
   un moyen de division et de détection de faisceau lumineux (61, 65) qui divise une portion particulière de faisceau lumineux d'un faisceau lumineux qui est passé à travers la lentille de focalisation (57) après avoir été réfléchi/ diffracté depuis le support d'enregistrement (50), la répartition de l'intensité de la portion particulière du faisceau lumineux étant fortement affectée par une variation de l'épaisseur du support d'enregistrement, en une pluralité de portions subdivisées de faisceau lumineux, et détecte les portions subdivisées de faisceau lumineux ; et
   un circuit de détection d'aberration sphérique (70) qui traite une pluralité de signaux de détection résultant de la portion particulière de faisceau lumineux sortie du moyen de division et de détection de faisceau lumineux pour détecter une aberration sphérique provoquée par une variation de l'épaisseur du support d'enregistrement ;
   **caractérisée en ce que** :
   le moyen de division et de détection de faisceau lumineux (61, 65), à réception de la portion particulière de faisceau lumineux réfléchie et diffractée par le support d'enregistrement (50) en faisceaux lumineux diffractés d'ordre 0 et $\pm$ du 1er ordre où les faisceaux lumineux diffractés $\pm$ du 1er ordre se chevauchent partiellement au niveau de la pupille de sortie de la lentille de focalisation (57), divise la portion particulière de faisceau lumineux correspondant à la portion de chevauchement en une première portion de faisceau lumineux sur un axe croisant l'axe optique parallèle à une direction radiale ou tangentielle du support d'enregistrement, et les deuxième et troisième portions de faisceau lumineux sur l'un ou l'autre côté de la première portion du faisceau lumineux dans la direction tangentielle ou dans la direction radiale du support d'enregistrement, et détecte un premier signal de détection provenant de la première portion de faisceau lumineux, et un second signal de détection provenant des deuxième et troisième portions de faisceau lumineux ; et
   le circuit de détection d'aberration sphérique (70) détecte le signal d'aberration sphérique en soustrayant le second signal de détection du premier signal de détection.

2. Tête de lecture optique selon la revendication 1, dans laquelle le moyen de division et de détection de faisceau lumineux comprend :

un élément optique formant hologramme (61) ayant des première, deuxième et troisième zones de motif qui divisent/diffractent les portions particulaires de faisceau lumineux en les première, deuxième et troisième portions de faisceau lumineux ; et
une unité de photodétection (65) ayant un premier photodétecteur qui reçoit la première portion de faisceau lumineux étant passée à travers la première zone de motif et sort le premier signal de détection, et un second photodétecteur qui reçoit les deuxième et troisième portions de faisceau lumineux étant passées à travers les deuxième et troisième zones de motif et sort le second signal de détection.

3. Tête de lecture optique selon la revendication 2, dans laquelle le support d'enregistrement (50) a une structure crête-sillon de telle sorte qu'un faisceau lumineux irradié sur le support d'enregistrement soit réfléchi et diffracté en faisceaux lumineux d'ordre 0 et ± du 1er ordre, et les faisceaux lumineux diffractés ± du 1er ordre se chevauchent partiellement au niveau de la pupille de sortie de la lentille de focalisation (57) ; la portion particulaire de faisceau lumineux correspond à la portion de chevauchement des faisceaux lumineux diffractés ± du 1er ordre ; et les première, deuxième et troisième zones de motif de l'élément optique formant hologramme (61) sont conçues de telle sorte que la portion de faisceau lumineux en chevauchement soit divisée et diffractée en la première portion de faisceau lumineux sur l'axe optique, et les deuxième et troisième portions de faisceau lumineux au niveau de l'un ou l'autre côté de la première portion de faisceau lumineux dans la direction tangentielle ou la direction radiale du support d'enregistrement.

4. Tête de lecture optique selon la revendication 3, dans laquelle le support d'enregistrement a un format qui satisfait à l'équation :

$$\frac{\lambda}{2 \times NA \times Gw} < 1$$

où λ indique la longueur d'onde de la source de lumière, NA indique l'ouverture numérique de la lentille de focalisation, et Gw indique la largeur de sillon du support d'enregistrement.

5. Tête de lecture optique selon l'une quelconque des revendications 2 à 4, dans laquelle l'unité de photodétection (65) comprend en outre un troisième photodétecteur qui reçoit la portion restante d'un faisceau lumineux étant passée à travers l'élément optique formant hologramme (61), à l'exclusion de la portion particulaire de faisceau lumineux, et détecte un signal de reproduction d'informations provenant du support d'enregistrement, un signal d'erreur de focalisation et/ou un signal d'erreur de poursuite.

6. Tête de lecture optique selon l'une quelconque des revendications 2 à 4, dans laquelle les deuxième et troisième zones de motif ont le même motif holographique, et la première zone de motif a un motif holographique différent de celui des première et seconde zones de motif.

7. Tête de lecture optique selon la revendication 1, dans laquelle le support d'enregistrement (50) comporte des crêtes et des sillons de telle sorte qu'un faisceau lumineux irradié sur le support d'enregistrement soit réfléchi et diffracté en faisceaux lumineux diffractés d'ordre 0 et ± du 1er ordre, et des tâches des faisceaux lumineux diffractés ± du 1er ordre se chevauchent partiellement au niveau de la pupille de sortie de la lentille de focalisation ; et la portion particulaire de faisceau lumineux correspond à la portion de chevauchement des faisceaux lumineux diffractés ± du 1er ordre.

8. Tête de lecture optique selon la revendication 7, dans laquelle le support d'enregistrement a un format qui satisfait à l'équation :

$$\frac{\lambda}{2 \times \text{NA} \times \text{Gw}} < 1$$

où λ désigne la longueur d'onde de la source de lumière, NA indique l'ouverture numérique de la lentille de focalisation, et Gw désigne la largeur de sillon du support d'enregistrement.

9. Tête de lecture optique selon l'une quelconque des revendications 1 à 4, et les revendications 7 et 8, dans laquelle le circuit de détection d'aberration sphérique (70) détecte le signal d'aberration sphérique en normalisant un signal différentiel obtenu en soustrayant le second signal de détection du premier signal de détection, en ce qui concerne la somme des premier et second signaux de détection.

10. Tête de lecture optique selon la revendication 9, dans laquelle le circuit de détection d'aberration sphérique (70) amplifie au moins l'un parmi les premier et second signaux de détection avec un facteur de gain prédéterminé, et traite les résultats pour détecter le signal d'aberration sphérique.

11. Tête de lecture optique selon l'une quelconque des revendications 1 à 4, et les revendications 7 et 8, dans laquelle le circuit de détection d'aberration sphérique amplifie au moins l'un parmi les premier et second signaux de détection avec un facteur de gain prédéterminé, et traite les résultats pour détecter le signal d'aberration sphérique.

12. Tête de lecture optique selon l'une quelconque des revendications 1, 7 et 8, dans laquelle le moyen de division et de détection de faisceau lumineux (61, 65) détecte un signal de reproduction d'informations provenant du support d'enregistrement, un signal d'erreur de focalisation, et/ou un signal d'erreur de poursuite, au moyen du signal de détection résultant de la portion restante de faisceau lumineux à l'exclusion de la portion particulaire de faisceau lumineux.

13. Tête de lecture optique selon l'une quelconque des revendications précédentes, comprenant en outre un élément de compensation d'aberration sphérique (75) sur un chemin optique entre le dispositif de changement de chemin optique (55) et la lentille de focalisation (57), qui est entraîné selon le signal d'aberration sphérique détecté par le circuit de détection d'aberration sphérique (70), pour corriger une aberration sphérique provoquée par une variation de l'épaisseur du support d'enregistrement.

# FIG. 1 (PRIOR ART)

# FIG. 2 (PRIOR ART)

# FIG. 3

# FIG. 4 (PRIOR ART)

# FIG. 5A (PRIOR ART)

# FIG. 5B (PRIOR ART)

# FIG. 5C (PRIOR ART)

# FIG. 6

# FIG. 7

+1$^{th}$-ORDER DIFFRACTED LIGHT BEAM    −1$^{th}$-ORDER DIFFRACTED LIGHT BEAM

LB

TANGENTIAL DIRECTION

P2

P1

P3

0$^{th}$-ORDER DIFFRACTED LIGHT BEAM

RADIAL DIRECTION

# FIG. 8A

TANGENTIAL
DIRECTION

RADIAL DIRECTION

# FIG. 8B

TANGENTIAL
DIRECTION

RADIAL DIRECTION

# FIG. 8C

$\times 10^{-9}$

INTENSITY

TANGENTIAL
DIRECTION

RADIAL
DIRECTION

# FIG. 9A

TANGENTIAL
DIRECTION

RADIAL DIRECTION

# FIG. 9B

TANGENTIAL
DIRECTION

RADIAL DIRECTION

# FIG. 9C

$\times 10^{-9}$

INTENSITY

TANGENTIAL
DIRECTION

RADIAL
DIRECTION

## FIG. 10A

TANGENTIAL
DIRECTION

RADIAL DIRECTION

## FIG. 10B

TANGENTIAL
DIRECTION

RADIAL DIRECTION

## FIG. 10C

$\times 10^{-9}$

TANGENTIAL
DIRECTION

RADIAL
DIRECTION

INTENSITY

# FIG. 11

RADIAL
DIRECTION

TANGENTIAL
DIRECTION

# FIG. 12

SPHERICAL ABERRATION COEFFICIENT [λ]

# FIG. 13

FOCUS COEFFICIENT [λ]

# FIG. 14A

TANGENTIAL
DIRECTION

RADIAL DIRECTION

# FIG. 14B

TANGENTIAL
DIRECTION

RADIAL DIRECTION

# FIG. 14C

$\times 10^{-9}$

1.5

INTENSITY

1

0.5

0

TANGENTIAL
DIRECTION

RADIAL
DIRECTION

**EP 1 215 668 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 12155979 B

- EP 0936603 A

26